(19) Europäisches Patentamt European Patent Office Office européen des brevets

(11) **EP 4 374 144 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **22738662.0**

(22) Anmeldetag: **04.07.2022**

(51) Internationale Patentklassifikation (IPC):
***G01F 1/84*** (2006.01)

(52) Gemeinsame Patentklassifikation (CPC):
**G01F 1/8436**

(86) Internationale Anmeldenummer:
**PCT/EP2022/068450**

(87) Internationale Veröffentlichungsnummer:
**WO 2023/001534 (26.01.2023 Gazette 2023/04)**

(54) **VERFAHREN ZUM BETREIBEN EINES CORIOLIS-MASSEDURCHFLUSSMESSGERÄTES**

METHOD FOR OPERATING A CORIOLIS MASS FLOWMETER

PROCÉDÉ DE FONCTIONNEMENT D'UN DÉBITMÈTRE MASSIQUE DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2021 DE 102021118961**

(43) Veröffentlichungstag der Anmeldung:
**29.05.2024 Patentblatt 2024/22**

(73) Patentinhaber: **Endress+Hauser Flowtec AG**
**4153 Reinach (CH)**

(72) Erfinder:
• **ZHU, Hao**
**85354 Freising (DE)**
• **POHL, Johan**
**79110 Freiburg (DE)**
• **RIEDER, Alfred**
**84032 Landshut (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
US-A- 4 680 974 US-A- 4 823 614
US-A1- 2019 162 702

**Beschreibung**

Die vorliegende Erfindung betrifft ein Verfahren zum Betreiben eines Coriolis-Massedurchflussmessgerätes mit mindestens einem schwingfähigen Messrohr zum Führen eines Mediums.

Beim Betrieb eines jeden Messgerätes können Messfehler auftreten, so auch bei einem Coriolis-Massedurchflussmessgrät, wobei grundsätzlich zwischen einem Nullpunktfehler und einem Spannefehler zu unterscheiden ist. Nullpunktfehler entstehen insbesondere aufgrund von Asymmetrien im Schwingungsverhalten des Messrohres.

Die internationale Veröffentlichung WO 2019/045703 A1 beschreibt, dass sich die Steifigkeit eines Messrohrs mit der Zeit beispielsweise durch Abrasion oder Korrosion ändern kann, wobei sich der Nullpunktfehler nicht verändert. Messfehler aufgrund veränderter Messrohrsteifigkeit lassen sich beispielsweise anhand des Verhältnisses von Erregersignal und Sensorsignal identifizieren. Asymmetrien, die den Nullpunkt verändern, können dagegen beispielsweis durch inhomogene Dämpfungen verursacht werden und sind einer Detektion mit den bisher beschriebenen Betriebsverfahren nicht zugänglich. Selbstverständlich kann bei einer werksseitigen Kalibration der jeweilige Nullpunktfehler für die betrachteten Schwingungsmoden bei einem stillstehenden Medium, also einem Durchfluss von Null ermittelt werden, und bei der Berechnung der Durchflussmesswerte entsprechend abgezogen werden. Im laufenden Messbetrieb ist jedoch mit den bisherigen Überwachungsverfahren nicht erkennbar, ob sich der Nullpunktfehler gegenüber dem Zustand bei der werksseitigen Kalibrierung verändert hat. Dies würde daher im Messbetrieb zu unerkannten Messfehlern bei der Ermittlung der Massedurchflussrate führen.

Das Dokument US 4 680 974 A offenbart ein Verfahren um Betreiben eines Coriolis-Massedurchflussmessgerätes mit mindestens einem schwingfähigen Messrohr zum Führen eines Mediums, umfassend: Anregen einer ersten symmetrischen Biegeschwingungsmode des mindestens einen Messrohrs; Anregen einer zweiten symmetrischen Biegeschwingungsmode des mindestens einen Messrohrs; Ermitteln eines ersten Massadurchflussratenmesswerts auf Basis einer ersten Coriolisverformung des mindestens einen Messrohrs und eines ersten hinterlegten modenspezifischen Nullpunktfehlerwerts.

Es ist daher die Aufgabe der vorliegenden Erfindung, hier Abhilfe zu schaffen, und ein Betriebsverfahren anzugeben, das einen sich verändernden Nullpunkt rechtzeitig erkennt. Die Aufgabe wird erfindungsgemäß gelöst durch das Verfahren gemäß dem unabhängigen Patentanspruch 1.

Das erfindungsgemäße Verfahren zum Betreiben eines Coriolis-Massedurchflussmessgerätes mit mindestens einem schwingfähigen Messrohr zum Führen eines Mediums umfasst:

Anregen einer ersten symmetrischen Biegeschwingungsmode des mindestens einen Messrohrs;

Anregen einer zweiten symmetrischen Biegeschwingungsmode des mindestens einen Messrohrs;

Ermitteln eines ersten Massedurchflussratenmesswerts auf Basis einer ersten Coriolisverformung des mindestens einen Messrohrs eines ersten hinterlegten modenspezifischen Nullpunktfehlerwerts;

Ermitteln eines zweiten Massedurchflussratenmesswerts auf Basis einer zweiten Coriolisverformung des mindestens einen Messrohrs eines zweiten hinterlegten modenspezifischen Nullpunktfehlerwerts; und

Ermitteln eines Nullpunktabweichungswerts der Massedurchflussratenmessung in Abhängigkeit von einer Abweichung zwischen dem ersten Massedurchflussratenmesswert und dem zweiten Massedurchflussratenmesswert.

Die erste Coriolisverformung ergibt sich aufgrund der Trägheitskräfte des strömenden Mediums in Antwort auf die Schwingung des Messrohrs in der ersten symmetrischen Biegeschwingungsmode. Die zweite Coriolisverformung ergibt sich aufgrund der Trägheitskräfte des strömenden Mediums in Antwort auf die Schwingung des Messrohrs in der zweiten symmetrischen Biegeschwingungsmode.

Da der Nullpunktfehler im laufenden Messbetrieb nicht ohne weiteres zugänglich ist, wird hier ein Abweichungswert zwischen dem ersten Massedurchflussmesswert und dem zweiten Massedurchflussratenmesswert ermittelt, und dieser Abweichungswert wird als Nullpunktabweichungswert interpretiert, also als eine Abweichung zwischen den zeitlichen Veränderungen der Nullpunktfehler des ersten bzw. zweiten Massedurchflussratenmesswerts.

In einer Weiterbildung der Erfindung umfasst das Verfahren weiterhin das Überwachen des Nullpunktabweichungswerts; und das Signalisieren eines Fehlerstatus, wenn der mindestens eine Nullpunktabweichungswert einen Schwellwert überschreitet.

Hierbei geht die Erfindung von der Überlegung aus, dass große Nullpunktabweichungswerte hinreichende Änderungen der Nullpunktfehler der betrachteten Massedurchflussratenmesswerte voraussetzen. Insoweit deutet das erfindungsgemäße Verfahren den Nullpunktabweichungswert als Indiz für Nullpunktfehler. Wenn sich jedoch die Nullpunktfehler der betrachteten Massedurchflussratenmesswerte gleich entwickelten, würde das erfindungsgemäße Verfahren versagen, da dann kein veränderlicher Nullpunktabweichungswert festzustellen wäre. Dies ist jedoch eine sehr theoretische Sorge, da eine gleichmäßige Entwicklung der Nullpunktfehler sehr unwahrscheinlich ist. Wie bereits eingangs erwähnt, sind Nullpunktfehler die Folge von Asymmetrien im Schwingungsverhalten des Messrohrs, die insbesondere durch asymmetrisch verteilte lokale Dämpfungen auftreten, beispielsweise aufgrund von Belag und/oder Mikroreibung. Diese lokalen Dämpfungen wirken sich allerdings unterschiedlich auf die relevanten Schwingungsmoden aus, da die Verteilung der durch die lokalen Dämpfungen zu beeinflussenden Schwingungsenergie entlang des Messrohrs zwischen den betrachteten Schwingungsmoden sehr unterschiedlich ist.

In einer Weiterbildung der Erfindung umfasst das Ermitteln des ersten Massedurchflussratenmesswerts und des zweiten Massedurchflussratenmesswerts jeweils: Ermitteln jeweils eines vorläufigen Massedurchflussratenmesswerts auf Basis der jeweiligen Coriolis-Verformung des mindestens einen Messrohrs; Ermitteln jeweils eines Korrekturfaktors für den ersten und zweiten vorläufigen Massedurchflussratenmesswerts für eine Beeinflussung des Massedurchflussmessgerätes durch einen Resonatoreffekt aufgrund einer Gasbeladung des in dem Messrohr geführten Mediums; und Korrigieren der beiden vorläufigen Massedurchflussratenmesswerte mit dem jeweiligen Massedurchflussratenkorrekturfaktor.

In einer Weiterbildung der Erfindung umfasst das Verfahren weiterhin: Überprüfen auf Basis der Eigenfrequenzen mehrerer Biegeschwingungsmoden, ob eine Beeinflussung des Massedurchflussmessgerätes durch einen Resonatoreffekt aufgrund einer Gasbeladung des in dem Messrohr geführten Mediums vorliegt; wobei in diesem Fall das Ermitteln des ersten Massedurchflussratenmesswerts und des zweiten Massedurchflussratenmesswerts jeweils umfasst: Ermitteln jeweils eines vorläufigen Massedurchflussratenmesswerts auf Basis der jeweiligen Coriolisverformung des mindestens einen Messrohrs; Ermitteln jeweils eines Korrekturfaktors für den ersten und zweiten vorläufigen Massedurchflussratenmesswerts für eine Beeinflussung des Massedurchflussmessgerätes durch einen Resonatoreffekt aufgrund einer Gasbeladung des in dem Messrohr geführten Mediums; und Korrigieren der beiden vorläufigen Massedurchflussratenmesswerte mit dem jeweiligen Massedurchflussratenkorrekturfaktor.

In einer Weiterbildung der Erfindung wird das Verfahren bei einem stillstehenden Medium durchgeführt, wobei das Verfahren weiterhin umfasst:

Aktualisieren des ersten Nullpunktfehlerwerts auf Basis des ersten Massedurchflussratenmesswerts; und

Aktualisieren des zweiten Nullpunktfehlerwerts auf Basis des zweiten Massedurchflussratenmesswerts.

In einer Weiterbildung umfasst das Verfahren weiterhin: Korrigieren des ersten und zweiten Massedurchflussratenmesswerts bezüglich des Einflusses von mindestens einer der folgenden Einflussgrößen, vor dem Ermitteln des Nullpunktabweichungswerts: Mediendruck, Medientemperatur und Reynoldszahl. Durch diese Korrekturen wird sichergestellt, dass Einflussgrößen, die sich unterschiedlich auf die verschiedenen Biegeschwingungsmoden auswirken, keine Verfälschung des Nullpunktabweichungswerts nach sich ziehen.

Das erfindungsgemäße Coriolis-Massedurchflussmessgerät umfasst: mindestens ein Messrohr zum Führen eines Mediums; mindestens einen Erreger zum Anregen von Biegeschwingungsmoden des mindestens einen Messrohrs; mindestens einen Sensor zum Erfassen von Biegeschwingungen des mindestens einen Messrohrs; eine Mess- und Betriebsschaltung, die eingerichtet ist zum Treiben des Erregers, zum Erfassen von Signalen des mindestens einen Sensors, zum Ermitteln eines Massedurchflussmesswerts auf Basis der Signale des mindestens einen Sensors und zum Durchführen des erfindungsgemäßen Verfahrens.

Die Erfindung wird nun anhand der in den Zeichnungen dargestellten Ausführungsbeispiels näher erläutert. Es zeigt:

Fig. 1a: eine Seitenansicht eines Ausführungsbeispiels eines erfindungsgemäßen Coriolis-Massedurchflussmessgerätes zur Durchführung des erfindungsgemäßen Verfahrens;

Fig. 1b: eine räumliche Darstellung des Ausführungsbeispiels des erfindungsgemäßen Coriolis-Massedurchflussmessgerätes aus Fig. 1a;

Fig. 2a: eine schematische Darstellung der Biegelinie der ersten symmetrischen Biegeschwingungsmode;

Fig. 2b: eine schematische Darstellung der Coriolisverformung aufgrund des Massedurchflusses und der Messrohrschwingungen in der ersten symmetrischen Biegeschwingungsmode;

Fig. 2c: eine schematische Darstellung des Einflusses lokaler Dämpfungen auf die Durchflussmessung auf Basis der ersten symmetrischen Biegeschwingungsmode;

Fig. 3a: eine schematische Darstellung der Biegelinie der zweiten symmetrischen Biegeschwingungsmode;

Fig. 3b: eine schematische Darstellung der Coriolisverformung aufgrund des Massedurchflusses und der Messrohrschwingungen in der zweiten symmetrischen Biegeschwingungsmode;

Fig. 3c: eine schematische Darstellung des Einflusses lokaler Dämpfungen auf die Durchflussmessung auf Basis der zweiten symmetrischen Biegeschwingungsmode;

Fig. 4a: ein Flussdiagramm eines Ausführungsbeispiels eines erfindungsgemäßen Verfahrens zum Betreiben eines Coriolis-Massedurchflussmessgeräts;

Fig. 4b: ein detailliertes Flussdiagramm zu einem Teilschritt des Ausführungsbeispiels des erfindungsgemäßen Verfahrens aus Fig. 4a; und

Fig. 4c: ein Flussdiagramm eines Ausführungsbeispiels einer Weiterbildung des erfindungsgemäßen Verfahrens zum Betreiben eines Coriolis-Massedurchflussmessgeräts.

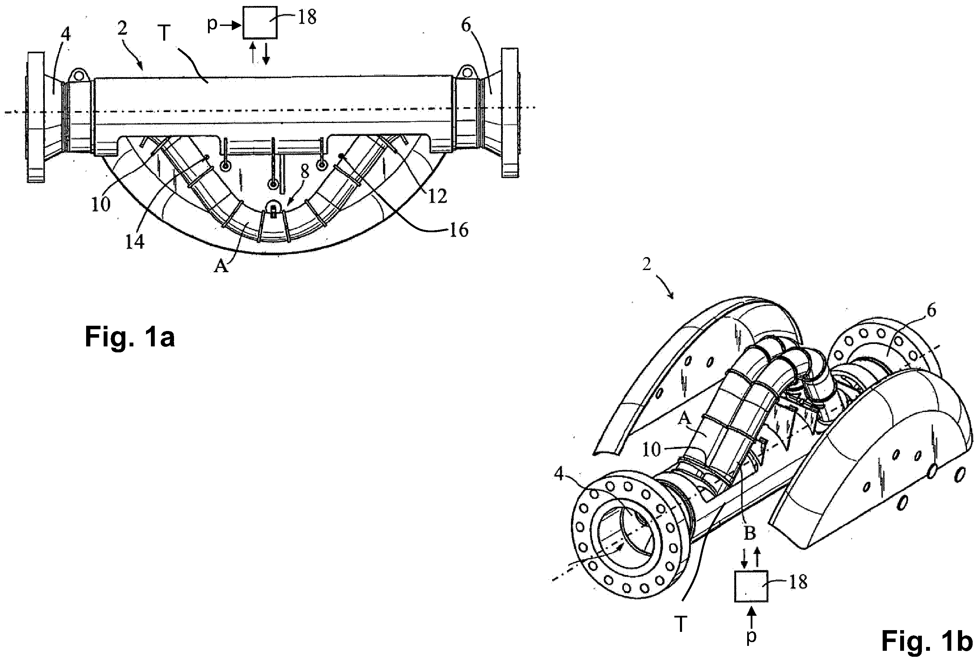

In den Figuren 1a und 1b ist ein Ausführungsbeispiel eines erfindungsgemäßen Coriolis-Massedurchflussmessgeräts 2 dargestellt, welches zur Durchführung des erfindungsgemäßen Verfahrens eingerichtet ist. Das Coriolis-Massedurchflussmessgerät 2 weist zwei schwingfähig gehalterte Messrohre A und B auf, die jeweils bogenförmig ausgebildet sind und parallel zueinander verlaufen. Das Coriolis-Massedurchflussmessgerät 2 ist derart in eine (nicht dargestellte) Rohrleitung einsetzbar, dass die beiden Messrohre A, B von dem in der Rohrleitung fließenden Fluid durchströmt werden. Einlassseitig und auslassseitig sind die Messrohre A, B jeweils in Strömungsteilern bzw. -sammlern 4, 6 gefasst, wobei letztere durch ein Trägerrohr T starr miteinander verbunden sind. Damit sind auch die einlassseitigen und auslassseitigen Endabschnitte der Messrohre mit dem Trägerrohr T gekoppelt, wodurch Relativbewegungen zwischen den einlassseitigen und auslassseitigen Endabschnitten der Messrohre wirksam unterdrückt sind. Zwischen den beiden Messrohren A, B ist ein elektrodynamischer Erreger 8 angeordnet, durch welchen die beiden Messrohre A, B zu Biegeschwingungen gegeneinander anregbar sind, wobei eine freie Schwingungslänge der Messrohre A, B durch Koppelelemente 10, 11 festgelegt ist, mit denen die Messrohre einlassseitig und auslassseitig mechanisch gekoppelt sind. Zwischen den beiden Messrohren A, B sind jeweils an einem einlassseitigen und an einem auslassseitigen Abschnitt elektrodynamische Schwingungssensoren 14, 16 angeordnet. Das Coriolis-Massedurchflussmessgerät 2 umfasst weiterhin eine Betriebs- und Auswerteschaltung 18 zum Speisen des Erregers 8 mit einem Erregerstrom und zum Erfassen und Auswerten von Messsignalen der elektrodynamischen Schwingungssensoren 14, 16. Das Coriolis-Massedurchflussmessgerät 2 umfasst weiterhin einen (hier nicht dargestellten) Temperatursensor, der beispielsweise an dem ersten Koppelelement 10 angeordnet ist, um einen ersten, für die Temperatur der Messrohre A, B repräsentativen Temperaturmesswert zu ermitteln. Die Positionierung des Temperatursensors an dem Koppelelement 10 ist insofern sachgerecht, als das Koppelelement nur mit den Messrohren A, B verbunden ist, so dass die Temperatur des Koppelelements weitgehend durch die Temperatur der Messrohre definiert ist. Gleichermaßen kann der Temperatursensor auch an einem der Messrohre, insbesondere außerhalb des durch die Koppelelemente begrenzten schwingfähigen Abschnitts angeordnet sein, womit eine kürzere Ansprechzeit des Temperatursensors erreicht wird. Die Mess- und Betriebsschaltung 18 dazu eingerichtet, Messsignale des Temperatursensors zu erfassen, welche die Temperaturmesswerte repräsentieren, die beispielsweise in die Berechnung des temperaturabhängigen Elastizitätsmoduls eingehen.

Zur Durchführung des erfindungsgemäßen Verfahrens ist es vorteilhaft, wenn die Mess- und Betriebsschaltung weiterhin einen Eingang für einen Druckmesswert p aufweist, um den Mediendruck bei der Durchführung des erfindungsgemäßen Verfahrens zum Betreiben des Coriolis-Massedurchflussmessgeräts berücksichtigen zu können.

Wenngleich Fign. 1a und 1b ein Ausführungsbeispiel eines Coriolis-Massedurchflussmessgeräts mit einem Paar in der Ruhelage gebogener Messrohre zeigen, ist die Erfindung gleichermaßen anwendbar für Coriolis-Massedurchflussmessgeräte mit einem einzigen Messrohr oder mit mehreren Paaren von Messrohren. Gleichermaßen können anstelle der dargestellten, in der Ruhelage gebogener Messrohre mit einer Spiegelsymmetrie bezüglich einer Messrohrquerebene auch S-förmige Messrohre oder gerade Messrohre zur Realisierung der Erfindung zum Einsatz kommen.

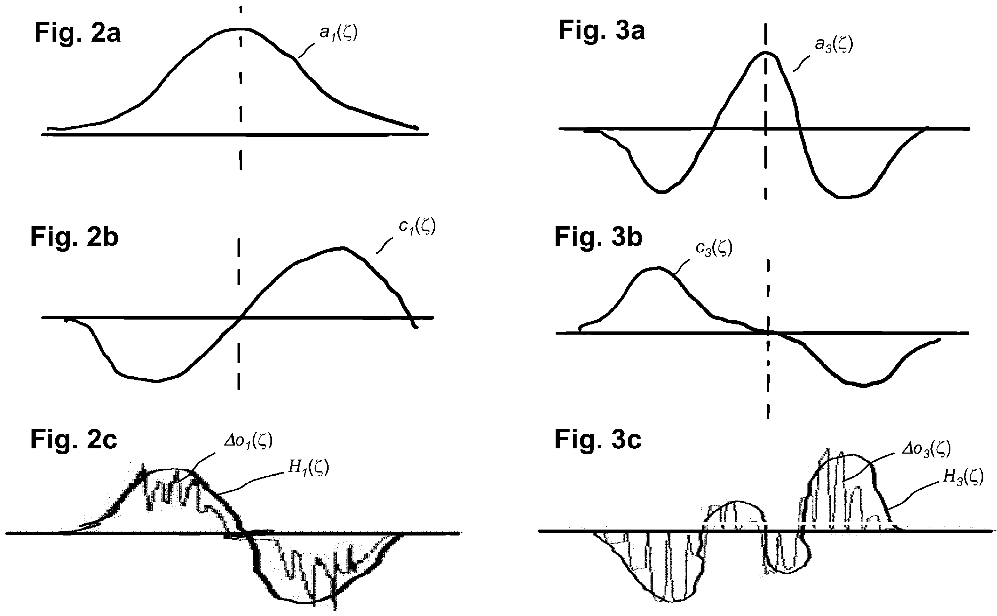

Das der Erfindung zugrundeliegende Prinzip wird im Folgenden anhand von Fign. 2a bis c und 3a bis c erläutert. Die Massedurchflussmessung auf Basis des Coriolisprinzips wertet eine Abweichung einer Schwingung von ihrer idealen symmetrischen Form aus, wobei die Abweichung durch eine Überlagerung einer antisymmetrischen Coriolisverformung verursacht ist, deren Größe proportional zum Massedurchfluss ist. Fign 2a und 3a zeigen schematisch die Biegelinien $a_1(\zeta)$, $a_3(\zeta)$ der ersten zwei symmetrischen Biegeschwingungsmoden eines Messrohrs entlang einer Koordinate $\zeta$ in Längsrichtung des Messrohrs, wobei Fign. 2b und 3b jeweils die zugehörigen Coriolis-Verformungen $c_1(\zeta)$, $c_3(\zeta)$ des Messrohrs darstellen, die jeweils der zugehörigen Biegeschwingungsmode überlagert sind. Auf den detaillierten Verlauf kommt es im vorliegenden Zusammenhang nicht an. Wesentlich ist nur, dass die Coriolis-Verformungen unterschiedlicher Moden, ihre Maxima und Minima in Längsrichtung an unterschiedlichen Positionen aufweisen. Damit weisen die dargestellten Coriolis-Verformungen voneinander abweichende Querempfindlichkeiten zu lokalen Dämpfungen auf, denn eine lokale Dämpfung am Maximum einer Coriolis-Verformung hat offensichtlich einen anderen Einfluss als eine lokale Dämpfung an einer Nullstelle der Coriolis-Verformung. Derartige lokale Dämpfungen, welche beispielsweise durch Belagsbildung und/oder Mikroreibung oder Gaseinschlüsse entstehen können, wirken sich als Nullpunktfehler aus, wie in Fign. 2c und 3c gezeigt ist. Die Kurven zeigen jeweils eine experimentell ermittelte Veränderung des Durchflussmesswerts $\Delta o_1(\zeta)$, $\Delta o_3(\zeta)$ für verschiedene lokale Dämpfungen der ersten und zweiten symmetrischen Biegeschwingungsmode in Abhängigkeit von der Position $\zeta$ der Dämpfung sowie zugehörige Hüllkurven H1, H3. Die Dämpfung wurde durch Anlegen einer Dämpfermasse mit einer Kontaktfläche von etwa 1 cm$^2$ am Messrohr bewirkt. Im normalen Messbetrieb sind diese Nullpunktfehler mit Verfahren nach dem Stand der Technik nicht zu identifizieren. Es ist jedoch erfindungsgemäß durch Vergleich zweier Massedurchflussmesswerte auf Basis unterschiedlicher Biegeschwingungsmoden festzustellen, ob eine Abweichung auftritt. Wenn andere Ursachen auszuschließen sind, kann diese Abweichung einem Nullpunktfehler zugeordnet werden.

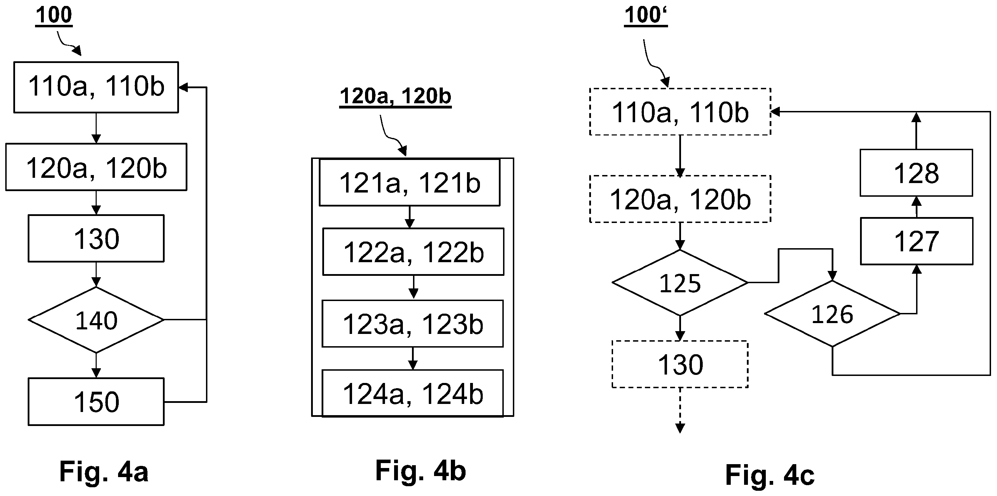

Der Ablauf des erfindungsgemäßen Verfahrens zur Nullpunktüberwachung wird nun anhand des in Fig. 4a dargestellten Ausführungsbeispiels näher erläutert. Das erfindungsgemäße Verfahren 100 beginnt mit dem Anregen 110a einer ersten symmetrischen Biegeschwingungsmode und dem Anregen 110b einer zweiten symmetrischen Biegeschwingungsmode des mindestens einen Messrohrs. Die beiden symmetrischen Biegeschwingungsmoden werden insbesondere gleichzeitig angeregt.

Es erfolgt das Ermitteln 120a eines ersten Massedurchflussratenmesswerts auf Basis einer ersten Coriolisverformung des mindestens einen Messrohrs und eines ersten hinterlegten modenspezifischen Nullpunktfehlerwerts, sowie das Ermitteln 120b eines zweiten Massedurchflussratenmesswerts auf Basis einer zweiten Coriolisverformung des mindestens einen Messrohrs und eines zweiten hinterlegten modenspezifischen Nullpunktfehlerwerts. Hierbei werden die Massedurchflussratenmesswerte $\dot{m}_i$ jeweils mittels einer linearen Funktion des modenspezifischen Zeitverzugs $\tau_i$ zwischen dem Geschwindigkeitsmaximum zweier Schwingungssensoren ermittelt gemäß:

$$\dot{m}_i = calf_i \cdot \tau_i + o_i,$$

wobei $calf_i$ und $o_i$ einen modenspezifischer Kalibrierfaktor bzw. einen modenspezifischen Nullpunktfehler beschreiben, die beispielsweise bei einer initialen Justage ermittelt und in einem Speicher der Mess- und Betriebsschaltung hinterlegt sind.

Im Idealfall gilt $|\dot{m}_1 - \dot{m}_2| < \varepsilon$ für gleichzeitig erhobene Massedurchflussratenmesswerte auf Basis zweier unterschiedlicher Biegeschwingungsmoden, wobei $\varepsilon$ ein Schwellwert für die Nullpunktabweichung ist. Um zu überprüfen, inwiefern diese Bedingung erfüllt ist, folgt das Ermitteln 130 des Differenzbetrags $|\dot{m}_1 - \dot{m}_2|$ zwischen den beiden Massendurchflussratenmesswerten und Zuordnen dieses Differenzbetrags zu einem Nullpunktabweichungswerts und Speichern des Nullpunktabweichungswerts.

Es folgt das Vergleichen 140 des Nullpunktabweichungswerts mit einem Schwellwert $\varepsilon$, wobei das Signalisieren 150 eines Fehlers erfolgt, wenn der Nullpunktabweichungswert den Schwellwert übersteigt. Anderenfalls beginnt ein neuer Durchlauf des Verfahrens ohne diese Signalisierung. Der Schwellwert kann beispielsweise 0,1% des Messbereichs betragen.

In einer Weiterbildung kann auch die zeitliche Entwicklung des Nullpunktabweichungswerts überwacht und als beispielsweise lineare Funktion der Zeit extrapoliert werden, wobei dann ein Signalisieren eines Wartungsbedarfs auch dann erfolgen kann, wenn aus der Extrapolation ein Überschreiten des Schwellwerts innerhalb eines zu definierenden Zeitraums von Beispielsweise einem Monat oder einer Woche zu erwarten ist.

Fig. 4b zeigt nun im Detail, wie das Ermitteln 120a, 120b der Massedurchflussratenmesswerte erfolgt. Insofern als die modenspezifischen Kalibrierfaktoren $calf_i$ modenspezifische Querempfindlichkeit aufweisen, ist deren Einfluss zunächst zu korrigieren, bevor ein Nullpunktabweichungswert bestimmt werden kann. In einem ersten Teilschritt erfolgt gleichzeitig das Ermitteln der 121a, 121b der modenspezifischen Zeitverzüge $\tau_i$. Anschließend erfolgt die Berechnung 121a, 121b der modenspezifischen vorläufigen Kalibrierfaktoren $calf'_i$ gemäß:

$$calf'_i = calf_{ref\,i} \prod_j K_{i,j},$$

wobei $calf_{ref\,i}$ die modenspezifischen Kalibrierfaktoren unter Referenzbedingung beschreibt und die $K_{j,j}$ modenspezifische Korrekturfaktoren sind, welche jeweils einen der Einflüsse von Dichte, Viskosität, Temperatur, Druck und Medienkompressibilität korrigieren.

Einzelheiten zur Korrektur von Einflüssen von Dichte, Viskosität Temperatur und Druck sind dem Fachmann der Durchflussmesstechnik geläufig und beispielsweise in EP 0 261 435 B1, DE 10 2007 061 585 A1, DE 10 2007 008 197 A1 sowie DE 10 2009 012 474 A1 und dem jeweils darin zitierten Stand der Technik beschrieben.

Einzelheiten zur Korrektur von Einflüssen der Medienkompressibilität sind beispielsweise in EP 3 394 575 B1 beschrieben.

Auf Basis der vorläufigen modenspezifischen Kalibrierfaktoren $calf'_i$ erfolgt das Berechnen 122a, 122b vorläufiger modenspezifischer Massedurchflussratenmesswerte $\dot{m}'_i$.

Mittels der vorläufigen modenspezifischen Massedurchflussratenmesswerte $\dot{m}'_i$ folgt das Bestimmen 123a, 123b der endgültige modenspezifischen Kalibrierfaktoren bestimmt werden gemäß

$$calf_i = calf'_i \, K_{i\,Re},$$

wobei die $K_{j\,Re}$ Faktoren für eine modenspezifische Reynoldszahl-Korrektur sind. Einzelheiten zur Reynoldszahl-Korrektur sind beispielsweise in EP 1 055 102 B1 beschrieben.

Mit den solchermaßen ermittelten endgültigen modenspezifischen Kalibrierfaktoren $calf_i$ erfolgt schließlich das Berechnen 124a, 124b der modenspezifischen Massedurchflussratenmesswerte gemäß:

$$\dot{m}_i = calf_i \cdot \tau_i + o_i.$$

Damit ist der Verfahrensschritt 120a, 120b abgeschlossen.

Fig. 4c zeigt schließlich eine modifizierte Ausgestaltung 100' des Verfahrens, welches eine Aktualisierung der modenspezifischen Nullpunktfehler $o_i$ ermöglicht, sofern eine Information verfügbar ist, ob der Durchfluss tatsächlich Null ist. Dies kann beispielsweise durch eine Statusmeldung eines Ventils gewährleistet sein, wenn der Status "geschlossen" eine Unterbrechung des zu überwachenden Durchflusses bewirkt. Eine Abfrage 125 ob ein Ventil offen ist, ist nach der Berechnung 120a, 120b der Massedurchflussratenmesswerte vorgesehen. Im positiven Fall geht das Verfahren wie zuvor weiter mit dem Ermitteln 130 des Differenzbetrags zwischen den Massedurchflussratenmesswerten. Im negativen Fall folgt dagegen das Prüfen 126, ob die Massedurchflussratenmesswerte um nicht mehr als einen Toleranzwert von Null abweichen. Im positiven Fall beginnt das Verfahren wieder vom Anfang. Im negativen Fall folgt dagegen das Überprüfen, eine Analyse 127 der modenspezifischen Nullpunktfehler $o_i$ welche den Massedurchflussratenmesswerten entsprechen, da letztere aktuell eigentlich Null sein müssten. Es wird beispielsweise überprüft ob eine Überschreitung eines modenspezifischen Alarmgrenzwerts für den Nullpunktfehler vorliegt, wobei in diesem Fall eine Fehlermeldung ausgegeben wird. Gleichermaßen wird beispielsweise bestimmt mit welcher mittleren Änderungsrate sich die Nullpunktfehler seit der letzten gesicherten Bestimmung verändert haben. Damit kann gemäß einer Ausgestaltung der Erfindung eine Prognose abgegeben werden, wann bei gleichen Prozessbedingungen mit einer ähnlichen Veränderung und/oder der Überschreitung des modenspezifischen Alarmgrenzwerts für den Nullpunktfehler zu rechnen ist. Eine Meldung über den erwarteten Zeitpunkt wird ausgegeben. Schließlich erfolgt das Abspeichern 128 der aktuellen modenspezifischen Massedurchflussratenmesswerte $\dot{m}_i$ als neue modenspezifische Nullpunktfehler $o_i$, bevor ein neuer Durchlauf des Verfahrens beginnt.

## Patentansprüche

1. Verfahren (100) zum Betreiben eines Coriolis-Massedurchflussmessgerätes mit mindestens einem schwingfähigen Messrohr zum Führen eines Mediums, umfassend:

   Anregen (110a) einer ersten symmetrischen Biegeschwingungsmode des mindestens einen Messrohrs;
   Anregen (110b) einer zweiten symmetrischen Biegeschwingungsmode des mindestens einen Messrohrs;
   Ermitteln (120a) eines ersten Massedurchflussratenmesswerts auf Basis einer ersten Coriolisverformung des mindestens einen Messrohrs und eines ersten hinterlegten modenspezifischen Nullpunktfehlerwerts;
   Ermitteln (120b) eines zweiten Massedurchflussratenmesswerts auf Basis einer zweiten Coriolisverformung des mindestens einen Messrohrs und eines zweiten hinterlegten modenspezifischen Nullpunktfehlerwerts; und
   Ermitteln (130) eines Nullpunktabweichungswerts der Massedurchflussratenmessung in Abhängigkeit von einer Abweichung zwischen dem ersten Massedurchflussratenmesswert und dem zweiten Massedurchflussratenmesswert.

2. Verfahren (100) nach Anspruch 1, weiterhin umfassend:

   Überwachen (140) des Nullpunktabweichungswerts; und
   Signalisieren (150) eines Fehlerstatus, wenn der mindestens eine Nullpunktabweichungswert einen Schwellwert überschreitet.

3. Verfahren nach Anspruch 1, weiterhin umfassend: Ermitteln (150) einer Änderungsrate des Nullpunktabweichungswerts und Signalisieren eines Fehlerstatus, wenn die Änderungsrate des Nullpunktabweichungswerts einen Schwellwert überschreitet.

4. Verfahren nach einem der vorhergehenden Ansprüche, wobei das Ermitteln des ersten Massedurchflussratenmesswerts und des zweiten Massedurchflussratenmesswerts jeweils umfasst:

   Ermitteln jeweils eines vorläufigen Massedurchflussratenmesswerts auf Basis der jeweiligen Coriolisverformung des mindestens einen Messrohrs;
   Ermitteln jeweils eines Korrekturfaktors für den ersten und zweiten vorläufigen Massedurchflussratenmesswerts für eine Beeinflussung des Massedurchflussmessgerätes durch einen Resonatoreffekt aufgrund einer Gasbeladung des in dem Messrohr geführten Mediums; und
   Korrigieren der beiden vorläufigen Massedurchflussratenmesswerte mit dem jeweiligen Massedurchflussratenkorrekturfaktor.

5. Verfahren nach Anspruch 1, weiterhin umfassend:

Überprüfen auf Basis der Eigenfrequenzen mehrerer Biegeschwingungsmoden, ob eine Beeinflussung des Massedurchflussmessgerätes durch einen Resonatoreffekt aufgrund einer Gasbeladung des in dem Messrohr geführten Mediums vorliegt;

wobei in diesem Fall das Ermitteln des ersten Massedurchflussratenmesswerts und des zweiten Massedurchflussratenmesswerts jeweils umfasst:

    Ermitteln jeweils eines vorläufigen Massedurchflussratenmesswerts auf Basis der jeweiligen Coriolisverformungmode des mindestens einen Messrohrs;
    Ermitteln jeweils eines Korrekturfaktors für den ersten und zweiten vorläufigen Massedurchflussratenmesswerts für eine Beeinflussung des Massedurchflussmessgerätes durch einen Resonatoreffekt aufgrund einer Gasbeladung des in dem Messrohr geführten Mediums; und
    Korrigieren der beiden vorläufigen Massedurchflussratenmesswerte mit dem jeweiligen Massedurchflussratenkorrekturfaktor.

6. Verfahren nach einem der vorhergehenden Ansprüche,
   wobei das Verfahren bei einem stillstehenden Medium durchgeführt wird, wobei das Verfahren weiterhin umfasst:

    Aktualisieren des ersten Nullpunktfehlerwertss auf Basis des ersten Massedurchflussratenmesswerts; und
    Aktualisieren des zweiten Nullpunktfehlerwerts auf Basis des zweiten Massedurchflussratenmesswerts.

7. Verfahren nach einem der vorhergehenden Ansprüche, weiterhin umfassend:
   Korrigieren des ersten und zweiten Massedurchflussratenmesswerts bezüglich des Einflusses von mindestens einer der folgenden Einflussgrößen, vor dem Ermitteln eines Nullpunktabweichungswerts: Mediendruck, Medientemperatur und Reynoldszahl.

8. Coriolis-Massedurchflussmessgerät (2), umfassend:

    mindestens ein Messrohr (A, B) zum Führen eines Mediums;
    mindestens einen Erreger (8) zum Anregen von Biegeschwingungsmoden des mindestens einen Messrohrs (A, B);
    mindestens einen Sensor (14, 16) zum Erfassen von Biegeschwingungen des mindestens einen Messrohrs;

eine Mess- und Betriebsschaltung (18), die eingerichtet ist zum Treiben des Erregers (8), zum Erfassen von Signalen des mindestens einen Sensors (14, 16) und zum Ermitteln eines Massedurchflussmesswerts auf Basis der Signale des mindestens einen Sensors (14, 16), **dadurch gekennzeichnet, dass** die Mess- und Betriebsschaltung (18) eingerichtet ist zum Durchführen des Verfahrens nach einem der Ansprüche 1 bis 7.

**Claims**

1. A method (100) for operating a Coriolis mass flow meter with at least one measuring tube that can oscillate for conducting a medium, comprising:

    Initiating (110a) a first symmetrical bending oscillation mode of the at least one measuring tube;
    Initiating (110b) a second symmetrical bending oscillation mode of the at least one measuring tube;
    Determining (120a) a first mass flow rate measured value based on a first Coriolis deformation of the at least one measuring tube and a first saved mode-specific zero point error value;

**characterized in that** the method is configured to

    determine (120b) a second mass flow rate measured value based on a second Coriolis deformation of the at least one measuring tube and a second saved mode-specific zero point error value; and
    determine (130) a zero point deviation value of the mass flow rate measurement as a function of a deviation between the first mass flow rate measured value and the second mass flow rate measured value.

2. The method (100) as claimed in claim 1, further comprising:

    Monitoring (140) the zero point deviation value; and
    Signaling (150) an error status if the at least one zero point deviation value exceeds a threshold value.

3. The method as claimed in claim 1, further comprising:
   Determining (150) a rate of change of the zero point deviation value and signaling an error status if the rate of change of the zero point deviation value exceeds a threshold value.

**4.** The method as claimed in one of the preceding claims, wherein determining the first mass flow rate measured value and the second mass flow rate measured value in each case comprises:

Determining in each case a provisional mass flow rate measured value based on the respective Coriolis deformation of the at least one measuring tube;

Determining in each case a correction factor for the first and second provisional mass flow rate measured values for an influence on the mass flow meter by a resonator effect due to a gas load of the medium conducted in the measuring tube; and

Correcting the two provisional mass flow rate measured values with the respective mass flow rate correction factor.

**5.** The method as claimed in claim 1, further comprising:

Checking, based on the natural frequencies of multiple bending oscillation modes, whether the mass flow meter is influenced by a resonator effect due to a gas load of the medium conducted in the measuring tube;

wherein in this case determining the first mass flow rate measured value and the second mass flow rate measured value in each case comprises:

Determining in each case a provisional mass flow rate measured value based on the respective Coriolis deformation mode of the at least one measuring tube;

Determining in each case a correction factor for the first and second provisional mass flow rate measured values for an influence on the mass flow meter by a resonator effect due to a gas load of the medium conducted in the measuring tube; and

Correcting the two provisional mass flow rate measured values with the respective mass flow rate correction factor.

**6.** The method as claimed in one of the preceding claims,

wherein the method is carried out when the medium is still, wherein the method further comprises:

Updating the first zero point error value based on the first mass flow rate measured value; and

Updating the second zero point error value based on the second mass flow rate measured value.

**7.** The method as claimed in one of the preceding claims, further comprising:

Correcting the first and second mass flow rate measured values with regard to the influence of at least one of the following influencing variables before determining a zero point deviation value: Media pressure, media temperature, and Reynolds number.

**8.** A Coriolis mass flow meter (2), comprising:

At least one measuring tube (A, B) for conducting a medium;

At least one exciter (8) for initiating bending oscillation modes of the at least one measuring tube (A, B);

At least one sensor (14, 16) for detecting bending oscillations of the at least one measuring tube;

A measuring and operating circuit (18), which is configured to drive the exciter (8), to detect signals from the at least one sensor (14, 16), and to determine a mass flow rate measured value based on the signals from the at least one sensor (14, 16), **characterized in that** the measuring and operating circuit (18) is configured to carry out the method as claimed in one of claims 1 to 7.

**Revendications**

**1.** Procédé (100) destiné à l'exploitation d'un débitmètre massique Coriolis avec au moins un tube de mesure apte à vibrer, lequel tube est destiné à guider le produit, lequel procédé comprend les étapes suivantes :

Excitation (110a) d'un premier mode de vibration de flexion symétrique de l'au moins un tube de mesure ;

Excitation (110b) d'un deuxième mode de vibration de flexion symétrique de l'au moins un tube de mesure ;

Détermination (120a) d'une première valeur mesurée de débit massique sur la base d'une première déformation de Coriolis de l'au moins un tube de mesure et d'une première valeur d'erreur de point zéro mémorisée, laquelle valeur est spécifique au mode ;

**caractérisé en ce que** le procédé est conçu pour la

Détermination (120b) d'une deuxième valeur mesurée de débit massique sur la base d'une deuxième déformation de Coriolis de l'au moins un tube de mesure et d'une deuxième valeur d'erreur de point zéro mémorisée, laquelle valeur est spécifique au mode ; et la

Détermination (130) d'une valeur d'écart de point zéro de la mesure de débit massique en fonction d'un écart entre la première valeur mesurée de débit massique et la deuxième valeur mesurée de débit massique.

2. Procédé (100) selon la revendication 1, comprenant en outre les étapes suivantes :

   Surveillance (140) de la valeur d'écart de point zéro ; et
   Signalisation (150) d'un état d'erreur lorsque l'au moins une valeur d'écart de point zéro dépasse une valeur de seuil.

3. Procédé selon la revendication 1, comprenant en outre l'étape suivante :
   Détermination (150) d'un taux de variation de la valeur d'écart de point zéro et signalisation d'un état d'erreur lorsque le taux de variation de la valeur d'écart de point zéro dépasse une valeur de seuil.

4. Procédé selon l'une des revendications précédentes, pour lequel la détermination de la première valeur mesurée de débit massique et de la deuxième valeur mesurée de débit massique comprend respectivement les étapes suivantes :

   Détermination d'une valeur mesurée de débit massique préliminaire respective sur la base de la déformation de Coriolis respective de l'au moins un tube de mesure ;
   Détermination d'un facteur de correction respectif pour les première et deuxième valeurs mesurées de débit massique préliminaires pour une influence du débitmètre massique par un effet de résonance dû à une charge de gaz du produit guidé dans le tube de mesure ; et
   Correction des deux valeurs mesurées de débit massique préliminaires avec le facteur de correction de débit massique respectif.

5. Procédé selon la revendication 1, comprenant en outre les étapes suivantes :

   Vérification, sur la base des fréquences propres de plusieurs modes de vibration de flexion, s'il existe une influence du débitmètre massique par un effet de résonance dû à une charge de gaz du produit guidé dans le tube de mesure ;
   Détermination de la première valeur mesurée de débit massique et de la deuxième valeur mesurée de débit massique comprenant dans ce cas respectivement les étapes suivantes :

   Détermination respectivement d'une valeur mesurée de débit massique préliminaire sur la base du mode de déformation de Coriolis respectif de l'au moins un tube de mesure ;
Détermination d'un facteur de correction respectif pour les première et deuxième valeurs mesurées de débit massique préliminaires pour une influence du débitmètre massique par un effet de résonance dû à une charge de gaz du produit guidé dans le tube de mesure ; et
Correction des deux valeurs mesurées de débit massique préliminaires avec le facteur de correction de débit massique respectif.

6. Procédé selon l'une des revendications précédentes,
   pour lequel le procédé est mis en œuvre dans le cas d'un produit immobile, le procédé comprenant en outre l'étape suivante :

   Actualisation de la première valeur d'erreur de point zéro sur la base de la première valeur mesurée de débit massique ; et
   Actualisation de la deuxième valeur d'erreur de point zéro sur la base de la deuxième valeur mesurée de débit massique.

7. Procédé selon l'une des revendications précédentes, comprenant en outre l'étape suivante :
   Correction des première et deuxième valeurs mesurées de débit massique en ce qui concerne l'influence d'au moins une des grandeurs d'influence suivantes, avant la détermination d'une valeur d'écart de point zéro : pression du produit, température du produit et nombre de Reynolds.

8. Débitmètre massique Coriolis (2), comprenant :

   au moins un tube de mesure (A, B) destiné à guider un produit ;
   au moins un excitateur (8) destiné à l'excitation de modes de vibration de flexion de l'au moins un tube de mesure (A, B) ;
   au moins un capteur (14, 16) destiné à la détection des vibrations de flexion de l'au moins un tube de mesure ;
   un circuit de mesure et de fonctionnement (18), lequel est conçu pour commander l'excitateur (8), lequel circuit est destiné à la détection des signaux de l'au moins un capteur (14, 16) afin de déterminer une valeur mesurée de débit massique sur la base des signaux de l'au moins un capteur (14, 16),

   **caractérisé en ce que** le circuit de mesure et de fonctionnement (18) est conçu pour mettre en œuvre le procédé selon l'une des revendications 1 à 7.

**Fig. 1a**

**Fig. 1b**

EP 4 374 144 B1

Fig. 2a

$a_1(\zeta)$

Fig. 2b

$c_1(\zeta)$

Fig. 2c

$\Delta o_1(\zeta)$

$H_1(\zeta)$

Fig. 3a

$a_3(\zeta)$

Fig. 3b

$c_3(\zeta)$

Fig. 3c

$\Delta o_3(\zeta)$

$H_3(\zeta)$

**Fig. 4a**

**Fig. 4b**

**Fig. 4c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019045703 A1
- US 4680974 A
- EP 0261435 B1
- DE 102007061585 A1
- DE 102007008197 A1
- DE 102009012474 A1
- EP 3394575 B1
- EP 1055102 B1